# EUROPEAN PATENT APPLICATION

(11) **EP 2 937 386 A1**
(43) Date of publication of application: **28.10.2015**
(21) Application number: 13864106.3
(22) Date of filing: 11.12.2013
(51) Int. Cl.: C08L 29/04, C08F 8/12, C08L 67/02

(54) **RESIN COMPOSITION AND MOLDED ARTICLE OF SAME**

(30) Priority: 19.12.2012 JP 2012277014
(71) Applicant: The Nippon Synthetic Chemical Industry Co., Ltd., Osaka-shi, Osaka 530-0018 (JP)
(72) Inventor: SAKAI Norihito, Osaka-shi Osaka 530-0018 (JP); INOUE Kaoru, Osaka-shi Osaka 530-0018 (JP); HIRANO Yasuhiro, Osaka-shi Osaka 530-0018 (JP)
(74) Representative: Kuhnen & Wacker
(86) International application number: PCT/JP2013/083249
(87) International publication number: WO 2014/097947

(57) **Abstract**

A resin composition of the present invention comprises a polyvinyl alcohol (PVA)-based resin (A) which comprises a structural unit represented by the following general formula (1) and has a degree of saponification of 85-94% by mole and a polybutylene adipate / butylene terephthalate copolymer (PBAT) (B), wherein a content ratio of the PVA-based resin (A) to the PBAT (B) ((A)/(B)) is from 80/20 to 60/40 (by weight).

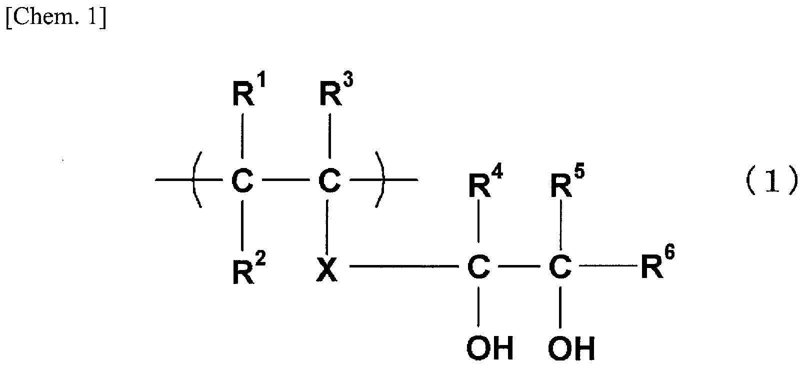

[In the formula, R¹ to R⁶ each independently represent a hydrogen atom or an organic group, and X represents a single bond or a linking chain.]

## Description

### Technical Field

The present invention relates to a resin composition comprising a polyvinyl alcohol-based resin as a main component, more particularly, the resin composition from which melt-molded articles excellent in terms of flexibility, transparency, and surface smoothness are obtained.

### Background Art

Resins based on polyvinyl alcohol (hereinafter abbreviated to PVA) are excellent in terms of gas barrier property, toughness, transparency, and the like, and are hence advantageously used as packaging materials for various goods.

However, since PVA-based resins each usually have a melting point and a decomposition point which are close to each other, it is substantially impossible to melt-mold the resins. This limitation has been a serious obstacle to a further extension of the applications of PVA-based resins.

Under these circumstances, a PVA-based resin having 1,2-diol components as side chains was recently proposed as a PVA-based resin capable of being melt-molded and excellent in terms of gas barrier property (see, for example, Patent Document 1).

The excellent gas barrier properties of PVA-based resins are attributable to the high crystallinity thereof, which is also causative of the high melting points of the PVA-based resins. In the PVA-based resin described in Patent Document 1, the steric hindrance of the side chains is presumed to lower the melting point, while the strong hydrogen bonding of the hydroxy groups of the side-chin 1,2-diol components is presumed to strongly restrain the molecular chains, thereby inhibiting the gas barrier properties from being reduced by the decrease in crystallinity.

However, the high crystallinity of the molecular chains and the high restraining power of hydrogen bonding in a PVA-based resin are causative of the inferiority of the PVA-based resin in flexibility and impact resistance to other thermoplastic resins. Although the PVA-based resin described in Patent Document 1, which has 1,2-diol components as side chains, also has attained slight improvements due to the steric hindrance of the side chains, this resin is still insufficient for practical use. There have been cases when a film-form molded article thereof is repeatedly flexed, pin-holes are formed to cause an abrupt drop in gas barrier property.

As a method for imparting flexibility and impact resistance to a rigid resin, a method is, for example, being extensively investigated in which a resin having a low elastic modulus is incorporated thereinto to form a sea-island structure in which that resin serves as an island component. Also with respect to the PVA-based resin described in Patent Document 1, which has 1,2-diol components as side chains, resin compositions obtained by incorporating a block copolymer having a polymer block of an aromatic vinyl compound, a polymer block of a conjugated diene compound, and the like, i.e., a styrene-based thermoplastic elastomer, thereinto have been proposed (see, for example, Patent Documents 2 and 3).

Meanwhile, PVA-based resins are biodegradable resins, and use of the resins in applications for taking advantage of that property is also important. It is hence desirable that the low-elastic-modulus resin to be incorporated into a PVA-based resin should also be a biodegradable resin. However, neither of the styrene-based thermoplastic elastomers described in Patent Documents 2 and 3 is a biodegradable resin.

Furthermore, there generally are cases where the formation of a sea-island structure impairs the transparency of the resin. In this respect, the technique in which a low-elastic-modulus resin is incorporated into a PVA-based resin to form a sea-island structure still has had room for improvement.

### Prior-Art Documents

### Patent Documents

Patent Document 1: JP-A-2004-075866
Patent Document 2: JP-A-2011-074364
Patent Document 3: JP-A-2012-046744

### Summary of the Invention

### Problems to Be Solved by the Invention

An object of the invention is to provide a resin composition which comprises a PVA-based resin as a main component and from which melt-molded articles excellent in terms of flexibility, transparency, and surface smoothness are obtained.

### Means for Solving the Problems

The present inventors diligently made investigations under the circumstances described above. As a result, the inventors have found that the object of the invention is accomplished with a resin composition comprising a PVA-based resin (A) which comprises a structural unit represented by the following general formula (1) and has a degree of saponification of 85-94% by mole and a polybutylene adipate / butylene terephthalate copolymer (hereinafter abbreviated to PBAT) (B), wherein a content ratio of the polyvinyl alcohol-based resin (A) to the PBAT (B) ((A)/(B)) is from 80/20 to 60/40 (by weight), thereby completing the invention.

That is, the present invention has the features of the following [1] to [4].
[1] A resin composition comprising a polyvinyl alcohol-based resin (A) which comprises a structural unit represented by the following general formula (1) and has a degree of saponification of 85-94% by mole and a polybutylene adipate / butylene terephthalate copolymer (B), wherein a content ratio of the polyvinyl alcohol-based resin (A) to the polybutylene adipate / butylene terephthalate copolymer (B) ((A)/(B)) is from 80/20 to 60/40 (by weight). 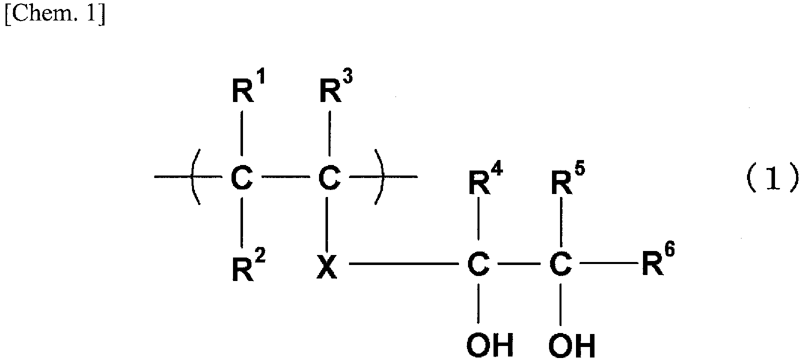
   [In the formula, R¹, R², and R³ each independently represent a hydrogen atom or an organic group, X represents a single bond or a linking chain, and R⁴, R⁵, and R⁶ each independently represent a hydrogen atom or an organic group.]
[2] The resin composition described in [1] above, wherein the structural unit represented by general formula (1) is the structural unit represented by the following general formula (1'). 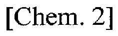 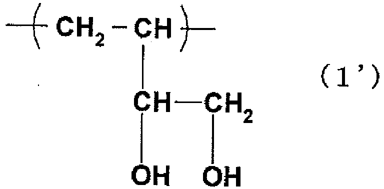
[3] The resin composition described in [1] or [2] above, wherein the content of the structural unit represented by general formula (1) in the polyvinyl alcohol-based resin (A) is 0.5-12% by mole.
[4] A molded article obtained by melt-molding the resin composition described in any one of [1] to [3] above.

The molded article obtained by melt-molding the resin composition of the invention has a sea-island structure formed therein in which the PVA-based resin (A), which comprises a structural unit having a 1,2-diol structure and represented by general formula (1) and which has a specific degree of saponification, serves as a sea component and the PBAT (B) serves as an island component. In the invention, it is presumed that due to the excellent affinity of the PVA-based resin (A) for the PBAT (B), the island component has a reduced particle diameter and the sea-island interface has enhanced adhesion and that, as a result, it has become possible to obtain excellent flexibility, transparency, and surface smoothness.

### Effects of the Invention

Since the molded article obtained by melt-molding the resin composition of the invention is excellent in terms of flexibility, transparency, and surface smoothness, this molded article is suitable for use as packaging materials for various goods. In particular, the molded article is useful as films, sheets, vessels, or a constituent component of multilayer structures having these shapes.

The PBAT (B) is a resin known as a biodegradable resin. The resin composition of the invention, which comprises that resin and a PVA-based resin (A), and the molded article thereof are also biodegradable.

### Embodiments for Carrying Out the Invention

The following explanations on constituent elements are for embodiments (representative embodiments) of the invention, and the invention should not be construed as being limited to the embodiments.

The invention is explained below in detail.

The resin composition of the invention is a resin composition which comprises a PVA-based resin (A) comprising a structural unit represented by the following general formula (1) and having a degree of saponification of 85-94% by mole and a PBAT (B), and in which a content ratio of the PVA-based resin (A) to the PBAT (B) ((A)/(B)) is from 80/20 to 60/40 (by weight).

The resin (A) and the copolymer (B) are explained below in order.

### [PVA-based Resin (A)]

First, the PVA-based resin (A) to be used in the invention is explained.

The PVA-based resin (A) to be used in the resin composition of the invention is a resin having a 1,2-diol structural unit represented by the following general formula (1). In general formula (1), R¹, R², and R³ each independently represent a hydrogen atom or an organic group, X represents a single bond or a linking chain, and R⁴, R⁵, and R⁶ each independently represent a hydrogen atom or an organic group.

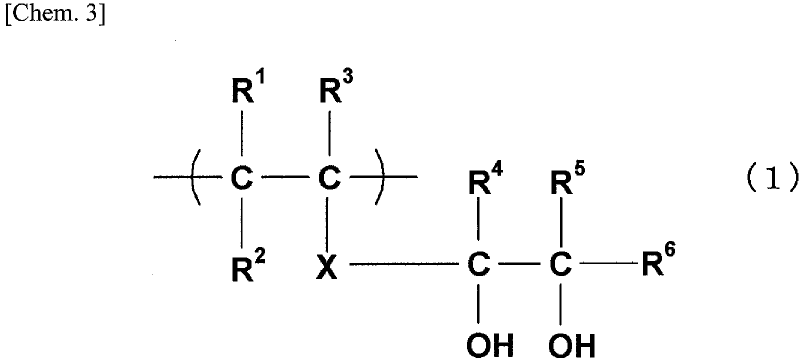

It is most preferable that in the 1,2-diol structural unit represented by general formula (1), R¹ to R³ and R⁴ to R⁶ are all hydrogen atoms and X is a single bond. The PVA-based resin which has the structural unit represented by the following general formula (1') is suitable for use.

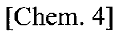

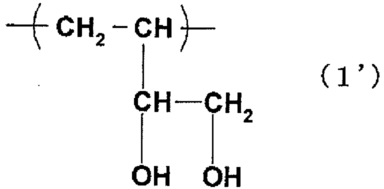

R¹ to R³ and R⁴ to R⁶ in the structural unit represented by general formula (1) may be organic groups so long as the amount thereof is not so large and the resin properties are not considerably impaired. Examples of the organic groups include alkyl groups having 1-4 carbon atoms, such as methyl, ethyl, n-propyl, isopropyl, n-butyl, isobutyl, and tert-butyl. These organic groups may have functional groups such as a halogeno, hydroxy, ester group, carboxy group, and sulfo group.

It is most preferable, from the standpoints of thermal stability and stability under high-temperature or acidic conditions, that the 1,2-diol structural unit represented by general formula (1) should be one in which X is a single bond. However, X may be a linking chain so long as this resin does not lessen the effects of the invention. Examples of the linking chain include hydrocarbons such as alkylenes, alkenylenes, alkynylenes, phenylene, and naphthylene (these hydrocarbons may have been substituted with halogens such as fluorine, chlorine, and bromine), and further include -O-, -(CH₂O)ₘ-, -(OCH₂)ₘ-, -(CH₂O)ₘCH₂-, -CO-, -COCO-, -CO(CH₂)ₘCO-, -CO(C₆H₄)CO-, -S-, -CS-, -SO-, -SO₂-, -NR-, -CONR-, -NRCO-, -CSNR-, -NRCS-, -NRNR-, -HPO₄-, -Si(OR)₂-, -OSi(OR)₂-, -OSi(OR)₂O-, -Ti(OR)₂-, -OTi(OR)₂-, -OTi(OR)₂O-, -Al(OR)-, -OAl(OR)-, and -OAl(OR)O- (the R moieties each independently represent any substituent, and preferably are a hydrogen atom or an alkyl group having 1-12 carbon atoms, and m is a natural number). Of these, alkylene groups having up to 6 carbon atoms, in particular, methylene, or -CH₂OCH₂- is preferred from the standpoint of stability during production or use.

Processes for producing the PVA-based resin to be used in the invention are not particularly limited. However, it is preferred to use: (i) a process in which a copolymer of a vinyl ester monomer and a compound represented by the following general formula (2) is saponified; (ii) a process in which a copolymer of a vinyl ester monomer and a compound represented by the following general formula (3) is saponified and decarboxylated; or (iii) a process in which a copolymer of a vinyl ester monomer and a compound represented by the following general formula (4) is saponified and subjected to ketal removal therefrom.

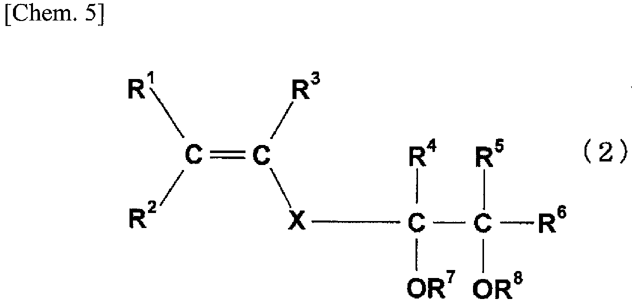

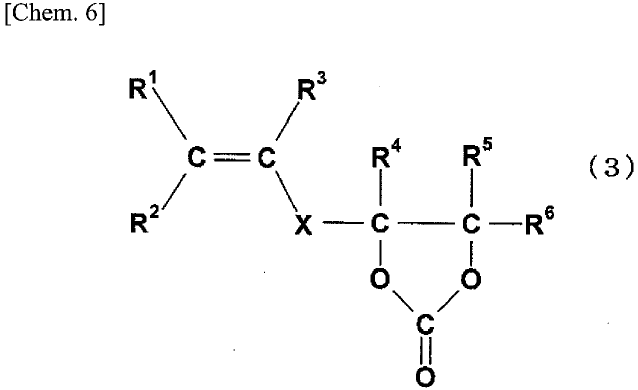

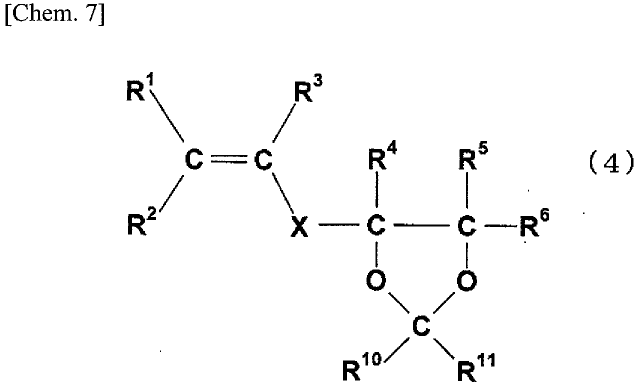

R¹, R², R³, X, R⁴, R⁵, and R⁶ in general formulae (2), (3), and (4) have the same meanings as in general formula (1). R⁷ and R⁸ are each independently a hydrogen atom or R⁹-CO- (wherein R⁹ is an alkyl group having 1-4 carbon atoms). R¹⁰ and R¹¹ are each independently a hydrogen atom or an alkyl group having 1-4 carbon atoms.

As processes (i), (ii), and (iii), use can be made of, for example, the methods described in JP-A-2006-95825.

Preferred of these is process (i) in which a 3,4-diacyloxy-1-butene, in particular, 3,4-diacetoxy-1-butene, is used as the compound represented by general formula (2), from the standpoint that this compound is excellent in terms of copolymerizability and industrial handleability.

When vinyl acetate is used as the vinyl ester monomer and this monomer is copolymerized with 3,4-diacetoxy-1-butene, the reactivity ratios (r) of these monomers are: r(vinyl acetate) = 0.710 and r(3,4-diacetoxy-1-butene) = 0.701. This indicates that 3,4-diacetoxy-1-butene has excellent copolymerizability with vinyl acetate as compared with vinylethylene carbonate, which is an example of the compound represented by general formula (3) used in process (ii), in which r(vinyl acetate) = 0.85 and r(vinylethylene carbonate) = 5.4.

Meanwhile, the chin transfer constant (Cx) of 3,4-diacetoxy-1-butene is Cx(3,4-diacetoxy-1-butene) = 0.003 (65°C). This indicates that the compound does not inhibit the degree of polymerization from increasing or is not causative of a decrease in polymerization rate, as compared with vinylethylene carbonate, in which Cx(vinylethylene carbonate) = 0.005 (65°C), and with 2,2-dimethyl-4-vinyl-1,3-dioxolane, which is an example of the compound represented by general formula (4) used in process (iii) and in which Cx(2,2-dimethyl-4-vinyl-1,3-dioxolane) = 0.023 (65°C).

Furthermore, 3,4-diacetoxy-1-butene, which has such properties, has a great industrial advantage in that the by-product which is yielded when the copolymer of that compound is saponified is the same as the compound that is yielded as a by-product during the saponification from the structural units derived from vinyl acetate, which is frequently employed as the vinyl ester monomer. Namely, there is no need of disposing a special device or performing a special step in the post-treatment or solvent recovery system, and the existing facilities can be utilized.

Incidentally, 3,4-diacetoxy-1-butene, which was mentioned above, can be produced, for example, by the methods of synthesis via an epoxybutene derivative which are described in International Publication WO 00/24702, U.S. Patent 5,623,086, U.S. Patent 6,072,079, and the like, or by a reaction in which the 1,4-diacetoxy-1-butene obtained as an intermediate product in a 1,4-butanediol production step is isomerized using a metallic catalyst such as palladium chloride.

As a reagent-level product, a product of Acros N.V. is available on the market.

Incidentally, in cases when the PVA-based resin obtained by process (ii) or (iii) has undergone insufficient decarboxylation or deacetalization, carbonate rings or acetal rings remain in the side chains. There are hence cases where this PVA-based resin, when melt-molded, is crosslinked by such cyclic groups, resulting in the formation of a gel-form substance, or the like.

Consequently, from this standpoint also, the PVA-based resin obtained by process (i) is suitable for use in the invention.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl Versatate. However, it is preferred to use vinyl acetate from the standpoint of profitability.

Besides the monomers described above (vinyl ester monomers and compounds represented by general formulae (2), (3), and (4)), the following compounds may have been copolymerized as comonomer units so long as the comonomer units do not exert a considerable influence on the resin properties, specifically, the amount thereof is up to 10% by mole: α-olefins such as ethylene and propylene; hydroxy-containing α-olefins such as 3-buten-1-ol, 4-penten-1-ol, and 5-hexene-1,2-diol and derivatives thereof such as acylation products; unsaturated acids such as itaconic acid, maleic acid, and acrylic acid, salts thereof, or mono- or dialkyl esters thereof; and nitriles such as acrylonitrile, amides such as methacrylamide and diacetoneacrylamide, olefinsulfonic acids such as ethylenesulfonic acid, allylsulfonic acid, methallylsulfonic acid, and AMPS or salts thereof, and the like.

The degree of saponification (determined in accordance with JIS K6726) of the PVA-based resin (A) to be used in the invention is usually 85-94% by mole, especially 86-93% by mole, more preferably 87-90% by mole. In case where the degree of saponification thereof is too low, there are cases where the composition has unstable melt viscosity during melt molding, rendering stable molding difficult, or where the odor of acetic acid is emitted during molding and the odor remains in the molded article, or where the molded object obtained has insufficient gas barrier properties. Meanwhile, in case where the degree of saponification thereof is too high, the molded article obtained from this resin tends to be insufficient in flexibility, transparency, and surface smoothness.

It is preferable that the PVA-based resin (A) to be used should be one in which the content therein of 1,2-diol structural units is preferably 0.5-12% by mole, especially 1-10% by mole, in particular 3-9% by mole. In case where the content thereof is too low, this resin has an elevated melting point, which is close to the heat decomposition temperature, and is hence prone to cause scorching, gelation, and fish eyes due to pyrolysis during melt molding. Conversely, in case where the content thereof is too high, this resin shows improved adhesion to metals, resulting in impaired flowability during melt molding, and a thermal deterioration due to stagnation or the like is prone to occur.

The content of 1,2-diol structural units in the PVA-based resin (A) can be determined from a ¹H-NMR spectrum (solvent, DMSO-d6; internal reference, tetramethylsilane) of a resin obtained by completely saponifying the PVA-based resin. Specifically, the content thereof may be calculated from the areas of peaks assigned to the hydroxy protons, methyl protons, and methylene protons contained in the 1,2-diol units and to the methylene protons of the main chain, the protons of hydroxy groups bonded to the main chain, and the like.

It is more preferable that the PVA-based resin (A) to be used should be one which has an average degree of polymerization (determined in accordance with JIS K6726) of preferably 200-1,800, especially 300-1,500, in particular 300-1,000.

It is more preferable that the PVA-based resin (A) to be used should be one which has a melt flow rate (MFR), as measured at 210°C under a load of 2,160g, of preferably 0.5-50 g/10 min, especially 1-20 g/10 min, in particular 2-8 g/10 min. These values of MFR were measured with "Melt Indexer F-801 ", manufactured by Toyo Seiki Ltd.

Furthermore, it is more preferable that the PVA-based resin (A) to be used should be one which has a melt viscosity (ηA), as measured at 220°C and a shear rate of 122 sec⁻¹, of preferably 100-3,000 Pa·s, especially 300-2,000 Pa·s, in particular 800-1,500 Pa·s. These values of melt viscosity were measured with "Capirograph 1B", manufactured by Toyo Seiki Ltd.

When the average degree of polymerization thereof is too low or the MFR thereof is too high or the melt viscosity thereof is too low, there are cases where the molded object obtained has insufficient mechanical strength. Conversely, when the average degree of polymerization thereof is too high or the MFR thereof is too low or the melt viscosity thereof is too high, there are cases where the composition shows insufficient flowability and reduced moldability. There also is a tendency that abnormal heat generation due to shearing occurs during molding and the resin is prone to decompose thermally.

One PVA-based resin (A) may be used in the invention, or a mixture of two or more PVA-based resins (A) may be used in the invention. However, in the case of using such a mixture, it is preferable that the average degree of polymerization, average degree of saponification, and average content of 1,2-diol structural units and the melt viscosity of the mixture should be within the ranges shown above.

It is possible to further use a PVA-based resin which contains no 1,2-diol components as side chains, e.g., unmodified PVA. In this case, however, it is preferable that the PVA-based resin (A), which has 1,2-diol components as side chains, should be a main component, specifically, should account for at least 50% by weight, especially at least 80% by weight, of the sum of the PVA-based resins.

### [PBAT (B)]

Next, the PBAT (B) to be used in the invention is explained.

This PBAT (B) is a polycondensate obtained using 1,4-butanediol as a diol component and using adipic acid and terephthalic acid or derivatives thereof as a dicarboxylic acid component.

It is preferable that the PBAT (B) to be used in the invention should be one in which a content ratio of the structural units derived from adipic acid to the structural units derived from terephthalic acid is in the range of usually from 90/10 to 60/40, especially from 85/15 to 70/30, in particularly from 85/15 to 80/20, by mole. In case where the content ratio of the structural units derived from terephthalic acid is either too small or too large, this resin has increased crystallinity and an elevated melting point and this tends to result not only in impaired thermal stability during molding but also in reduced flexibility.

The weight-average molecular weight of the PBAT (B) to be used in the invention is usually 5,000-50,000, preferably 5,500-40,000, especially preferably 6,000-30,000. In case where the degree of polymerization thereof is too high, the composition has an increased melt viscosity and tends to be difficult to melt-mold. Conversely, in case where the degree of polymerization thereof is too low, the composition tends to give brittle molded objects.

Although the PBAT (B) according to the invention is a PBAT obtained using 1,4-butanediol as the diol, it is possible to employ a PBAT obtained using 1,4-butanediol in combination with another diol compound so long as the resin properties are not considerably impaired thereby. Specific examples of the diol compound include ethylene glycol, 1,3-propanediol, 1,2-propanediol, 1,5-pentanediol, 1,6-hexanediol, 1,4-cyclohexanediol, 1,4-cyclohexanedimethanol, and the like. However, the diol compound is not limited to these examples.

Likewise, PBAT obtained by using one or more of dicarboxylic acid compounds other than adipic acid and terephthalic acid and of derivatives of dicarboxylic acid compounds in combination with the starting materials can be used, so long as the resin properties are not considerably impaired thereby. Specific examples of the dicarboxylic acids and derivatives thereof include aliphatic dicarboxylic acid compounds such as oxalic acid, malonic acid, succinic acid, glutaric acid, azelaic acid, sebacic acid, heptanedioic acid, octanedioic acid, nonanedioic acid, decanedioic acid, undecanedioic acid, dodecanedioic acid, tridecanedioic acid, tetradecanedioic acid, pentadecanedioic acid, hexadecanedioic acid, octadecanedioic acid, eicosanedioic acid, maleic acid, fumaric acid, and 1,6-cyclohexanedicarboxylic acid and aromatic dicarboxylic acid compounds such as isophthalic acid and naphthalenedicarboxylic acid. However, the dicarboxylic acids and derivatives are not limited to these examples.

The PBAT (B) according to the invention may have structural units other than ones derived from the diol component and dicarboxylic acid component described above. Examples of such structural units may include ones which have a functional group capable of contributing to the formation of a branched structure or an increase in molecular weight and which thus improve processability.

As a method for obtaining the PBAT (B) to be used in the invention, a known process for producing a polyester-based resin can be used.

Examples of commercial products of the PBAT (B) include "Ecoflex", manufactured by BASF Japan Ltd.

### [Resin Composition]

The resin composition of the invention comprises the PVA-based polymer (A) described above and the PBAT (B) described above.

The content ratio of the PVA-based polymer (A) to the PBAT (B) in the resin composition of the invention (A/B) (weight ratio), is in the range of usually from 80/20 to 60/40, especially preferably from 80/20 to 70/30. When the content ratio of the PVA-based polymer (A) is too large, there are cases where the molded article obtained does not have sufficient flexing fatigue resistance. Conversely, too small content ratio thereof tend to result in insufficient gas barrier properties.

The resin composition of the invention may contain other polymers so long as the effects of the invention are not lessened thereby. Examples of the polymers that can be contained include various thermoplastic resins such as polyamides, polyesters, polyethylene, polypropylene, and polystyrene.

Furthermore, a reinforcing agent, filler, plasticizer, pigment, dye, lubricant, antioxidant, antistatic agent, ultraviolet absorber, heat stabilizer, light stabilizer, surfactant, antibacterial agent, antistatic agent, desiccant, antiblocking agent, flame retardant, crosslinking agent, hardener, blowing agent, nucleating agent, other thermoplastic resins, or the like may be contained according to need so long as the effects of the invention are not lessened thereby.

The resin composition of the invention can be prepared using a method and a device which are for use in mixing ordinary polymeric substances. It is especially preferred to use a method in which the composition is obtained through melt kneading. Examples of this device for melt kneading include a kneading machine, extruder, mixing rolls, Banbury mixer, and kneader. Especially suitable is a method which uses an extruder capable of continuous processing and having excellent mixing efficiency.

With respect to conditions under which such an extruder is used to conduct melt kneading and obtain the resin composition of the invention, it is necessary to suitably regulate the conditions in accordance with the melting point of the PVA-based resin (A), or the like. Usually, however, a temperature in the range of 160-220°C is employed.

The resin composition of the invention obtained through such mixing is usually formed into pellets, a powder, or the like so that the composition is used as a molding material. Preferred of these forms is the form of pellets, from the standpoints of ease of introduction into molding machines, handleability, and low possibility of posing the problem of dusting.

For molding into pellets, a known method can be used. However, a method in which the composition is extruded in the form of strands from the extruder, cooled, and then cut into a given length to obtain cylindrical pellets is efficient.

### [Molded Article]

Since the resin composition of the invention is excellent in terms of moldability, in particular, melt moldability, the resin composition is useful as a molding material. As methods for melt molding, use can be made of known molding methods such as extrusion molding, inflation molding, injection molding, blow molding, vacuum forming, pressure forming, compression molding, and calendering.

Examples of the molded article obtained from the resin composition of the invention include molded articles of various shapes, such as films, sheets, pipes, disks, rings, bag-shaped objects, bottle-shaped objects, and fiber-shaped objects.

It is also possible to produce a multilayer structure including a layer constituted of the resin composition of the invention and a layer formed from another material.

In particular, since the resin composition of the invention, which consists mainly of a PVA-based resin, shows excellent gas barrier properties under low-humidity conditions but may change considerably in the property as a result of moisture absorption, it is desirable to use the resin composition in the form of a multilayer structure in which a material having high water-vapor barrier properties has been disposed on a surface thereof.

Examples of the material having high water-vapor barrier properties include thermoplastic resins represented by polyolefin-based resins such as low-density polyethylene, medium-density polyethylene, high-density polyethylene, ethylene/vinyl acetate copolymers, ethylene/propylene copolymers, and polypropylene, polyester-based resins such as polyethylene terephthalate and polybutylene terephthalate, vinyl-chloride-based resins such as polyvinyl chloride and polyvinylidene chloride, and polyamide-based resins such as nylons, thermosetting resins such as epoxy resins and phenolic resins, metals, and films on which various metals have been vapor-deposited. Suitable ones may be selected in accordance with the intended use and desired properties.

In such multilayer structure, a layer of an adhesive may be interposed between the layer constituted of the resin composition of the invention and the layer constituted of another material. Examples of the adhesive to be used as the layer of an adhesive include carboxy-containing modified olefin-based polymers such as maleic-anhydride-modified polyethylene, maleic-anhydride-modified polypropylene, and maleic-anhydride-modified ethylene/vinyl acetate copolymers.

As a method for forming the multilayer structure through laminating with a thermoplastic resin, co-extrusion, co-injection, and the like can be used. Other methods include extrusion coating and a method in which the individual layers are formed beforehand and thereafter laminated. Any of these and other various methods can be employed in accordance with the desired shape, thickness, and the like.

The molded article obtained from the resin composition of the invention has excellent barrier properties against various gases and further has excellent flexibility and flexing fatigue resistance. This molded article can hence be used as articles required to have such properties. Examples of such applications include packaging materials or containers for beverages or foods, inner bags for bag-in-boxes, packings for containers, medical bags for fluid transportation, containers for organic liquids, pipes for transporting organic liquids, and containers, tubes, and hoses for various gases.

It is also possible to use the molded article as or in various electronic components, automotive components, industrial components, leisure goods, sports goods, daily necessaries, toys, medical instruments, or the like.

### Examples

The invention is explained below in more detail by reference to Examples, but the invention should not be construed as being limited to the following Examples unless the invention departs from the spirit thereof.

In the following Examples and Comparative Examples, "parts" and "%" are by weight.

### Production Example 1

### [Production of PVA-based Resin (A1)]

Into a reaction vessel equipped with a reflux condenser and a stirrer were introduced 76.6 parts of vinyl acetate (initial charge ratio, 40%), 14.2 parts of methanol, 9.2 parts of 3,4-diacetoxy-1-butene (initial charge ratio, 40%), and 0.068% by mole of azobisisobutyronitrile (based on the vinyl acetate introduced). While the contents were being stirred, the temperature was elevated in a nitrogen stream to initiate polymerization, during which the remainder of the vinyl acetate and that of the 3,4-diacetoxy-1-butene were continuously dropped thereinto at constant rates over 13.5 hours. At the time when the conversion of the vinyl acetate into polymer had reached 91%, m-dinitrobenzene was added to terminate the polymerization. Subsequently, the vinyl acetate monomer remaining unreacted was removed from the system by bubbling methanol vapor thereinto, thereby obtaining a methanol solution of a copolymer.

Next, the methanol solution was further diluted with methanol to adjust the concentration to 50% and then introduced into a kneader. While the temperature of the solution was kept at 35°C, a 2% methanol solution of sodium hydroxide was added in such an amount that the sodium hydroxide amount was 4.5 mmol per one mol of the sum of the vinyl acetate structural units and 3,4-diacetoxy-1-butene structural units contained in the copolymer, thereby conducting saponification. As the saponification proceeded, a product of saponification was precipitated. At the time when the saponification product had become particles, the particles were taken out by filtration, sufficiently washed with methanol, and dried in a hot-air drying oven. Thus, the desired PVA-based resin (A1) was produced.

The PVA-based resin (A1) obtained was analyzed for the degree of saponification in terms of the amount of an alkali consumed by hydrolyzing the remaining vinyl acetate and 3,4-diacetoxy-1-butene. As a result, the degree of saponification thereof was found to be 87.3% by mole. The resin was analyzed for the average degree of polymerization in accordance with JIS K 6726 and, as a result, the average degree of polymerization thereof was found to be 450. Furthermore, the content of structural units represented by general formula (1) was calculated from integrals determined by ¹H-NMR (300-MHz proton NMR; d6-DMSO solution; internal reference, tetramethylsilane; 50°C), and was found to be 6% by mole.

### Production Example 2

### [Production of PVA-based Resin (A2)]

The same procedure as in the production of PVA-based resin (A1) was conducted, except that the saponification reaction was performed for further 20 minutes from the time when the saponification product which had been precipitated in the saponification had become particles, and that the precipitate was then taken out by filtration. Thus, PVA-based resin (A2) was produced.

The PVA-based resin (A2) obtained had a degree of saponification of 93.1 % by mole and an average degree of polymerization of 450, and the content therein of structural units represented by general formula (1) was 6% by mole.

### Production Example 3

### [Production of PVA-based Resin (A3)]

The same procedure as in the production of PVA-based resin (A1) was conducted, except that the amount of the saponification reaction catalyst (sodium hydroxide) was changed to 12 mmol per one mol of the sum of the vinyl acetate structural units and the 3,4-diacetoxy-1-butene structural units. Thus, PVA-based resin (A3) was produced.

The PVA-based resin (A3) obtained had a degree of saponification of 99.2% by mole and an average degree of polymerization of 450, and the content therein of structural units represented by general formula (1) was 6% by mole.

### Example 1

### [Production of Resin Composition]

Eighty parts by weight of the PVA-based resin (A1) obtained in Production Example 1 was dry-blended with 20 parts by weight of PBAT (B) ("Ecoflex F BLEND C1200", manufactured by BASF A.G.). Thereafter, this blend was melt-kneaded with a twin-screw extruder under the following conditions, extruded into strands, and cut with a pelletizer to obtain a resin composition in the form of cylindrical pellets.
Diameter (D): 15 mm
L/D = 60
Screw rotation speed: 200 rpm
Set temperatures: C1/C2/C3/C4/C5/C6/C7/C8/D = 120/150/180/195/200/200/210/210/210°C
Screw pattern: 3-portion-kneading screws
Screen mesh: 90/90 mesh
Discharge rate: 1.5 kg/hr

### [Production of Film]

Using an extruder, the pellets obtained were subjected to film formation under the following conditions to produce a single-layer film having a thickness of about 30 µm. This film was evaluated for the following properties. The results thereof are shown in Table 1.
Diameter (D): 15 mm
L/D = 60
Screw rotation speed: 200 rpm
Set temperatures: C1/C2/C3/C4/C5/C6/C7/C8/D = 150/180/190/195/200/210/210/210/210°C
Discharge rate: 1.5 kg/hr
Screen mesh: 90/90 mesh
Die: width, 300 mm; coat-hanger type
Take-up speed: 2.6 m/min
Roll temperature: 50°C
Air gap: 1 cm

### (Flexibility)

The film obtained was subjected to a flexing test using a Gelvo type flex tester (manufactured by Rigaku Industrial Corp.) under the following conditions.
Test environment: 23°C, 50% RH
Flexing conditions: make a 2.5-inch forward movement and then twist by 440° while making a 3.5-inch forward movement
Cycle: 40 cycles/min
Number of flexings: 100

A specimen having dimensions of 28 cm × 17 cm was cut out of a central part of the film which had undergone the test, and the number of pin-holes therein was counted. This test was performed five times, and an average value therefor was determined. The results thereof are shown in Table 1.

### (Transparency)

The internal haze of the film obtained was measured using a hazeometer ("Haze Meter NDH2000", manufactured by Nippon Denshoku Kogyo K.K.). The results thereof are shown in Table 1.

### (Surface Smoothness)

The film obtained was applied to a glass plate, and alumina was vapor-deposited on the film surface by an electron beam vapor deposition method under the following conditions.
Degree of vacuum: 10⁻²-10⁻⁵ Pa
Temperature: 50-150°C
Period: 5 hr

The surface state of the film coated by vapor deposition was visually examined with an optical microscope (200-500 times power).

### Examples 2 and 3

Resin compositions were produced in the same manner as in Example 1, except that the contents of the PVA-based resin (A1) and PBAT (B) were changed as shown in Table 1. Films were produced therefrom and evaluated in the same manners as in Example 1. The results thereof are shown in Table 2.

### Example 4

A resin composition was produced in the same manner as in Example 1, except that the PVA-based resin (A2) obtained in Production Example 2 was used in place of the PVA-based resin (A1) and that the contents of the PVA-based resin (A) and PBAT (B) were changed as shown in Table 1. A film was produced and evaluated in the same manners as in Example 1.
The results thereof are shown in Table 2.

### Comparative Example 1

A resin composition was produced in the same manner as in Example 1, except that the PVA-based resin (A3) obtained in Production Example 3 was used in place of the PVA-based resin (A1). A film was produced and evaluated in the same manners as in Example 1. The results thereof are shown in Table 2.

**[Table 1]**

| | PVA-based resin (A) | | | | A/B (weight ratio) |
|---|---|---|---|---|---|
| | | Degree of saponification (mol%) | Amount of modification (mol%) | Degree of polymerization | |
| Example 1 | (A1) | 87.3 | 6 | 450 | 80/20 |
| Example 2 | (A1) | 87.3 | 6 | 450 | 70/30 |
| Example 3 | (A1) | 87.3 | 6 | 450 | 60/40 |
| Example 4 | (A2) | 93.1 | 6 | 450 | 70/30 |
| Comparative Example 1 | (A3) | 99.2 | 6 | 450 | 80/20 |

**[Table 2]**

| | Number of pin-holes | Haze (%) | Deposit surface |
|---|---|---|---|
| Example 1 | 75 | 1.3 | even |
| Example 2 | 12 | 2.0 | even |
| Example 3 | 5 | 2.6 | even |
| Example 4 | 27 | 2.3 | even |
| Comparative Example 1 | 120 | 2.4 | cracked |

A comparison between Example 1 and Comparative Example 1, which were equal in the content ratio of the PVA-based resin to the PBAT, has revealed differences due to the difference in the degree of saponification of the PVA-based resin (A). Specifically, the film obtained from the resin composition of Example 1 was superior in flexibility and transparency and in surface smoothness to the film of Comparative Example 1.

Similarly, from a comparison between Example 2 and Example 3, it was ascertained that by using a PVA-based resin (A) having a low degree of saponification, the flexibility and transparency of the film are improved.

Furthermore, from a comparison among Examples 1, 2, and 4, in which the same PVA-based resin (A) was used and which differed in the content ratio of the PVA-based resin to the PBAT, it was ascertained that the higher the content of the PBAT, the more the flexibility is improved but the lower the transparency tends to become.

While the invention has been described in detail and with reference to specific embodiments thereof, it will be apparent to one skilled in the art that various changes and modifications can be made therein without departing from the spirit and scope thereof. The present application is based on Japanese Patent Application No. 2012-277014 filed on December 19, 2012, and the contents are incorporated herein by reference.

### Industrial Applicability

Since the molded article obtained by melt-molding the resin composition of the invention is excellent in terms of flexibility, transparency, and surface smoothness, and is further biodegradable, this molded article is suitable for use as packaging materials for various goods. In particular, the molded article is useful as films, sheets, vessels, or a constituent component of multilayer structures having these shapes.

## Claims

1. A resin composition comprising a polyvinyl alcohol-based resin (A) which comprises a structural unit represented by the following general formula (1) and has a degree of saponification of 85-94% by mole and a polybutylene adipate / butylene terephthalate copolymer (B), wherein a content ratio of the polyvinyl alcohol-based resin (A) to the polybutylene adipate / butylene terephthalate copolymer (B) ((A)/(B)) is from 80/20 to 60/40 (by weight). 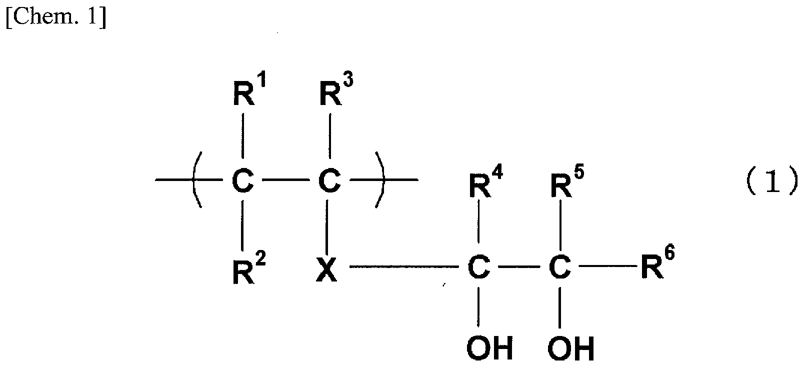 [In the formula, R¹, R², and R³ each independently represent a hydrogen atom or an organic group, X represents a single bond or a linking chain, and R⁴, R⁵, and R⁶ each independently represent a hydrogen atom or an organic group.]

2. The resin composition according to claim 1, wherein the structural unit represented by general formula (1) is the structural unit represented by the following general formula (1').

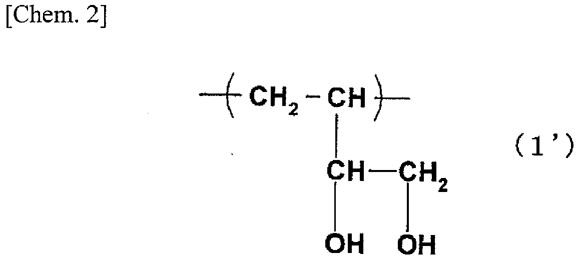

3. The resin composition according to claim 1 or 2, wherein the content of the structural unit represented by general formula (1) in the polyvinyl alcohol-based resin (A) is 0.5-12% by mole.

4. A molded article obtained by melt-molding the resin composition according to any one of claims 1 to 3.
